# EUROPÄISCHE PATENTANMELDUNG

(11) **EP 2 642 222 A2**
(43) Veröffentlichungstag der Anmeldung: **25.09.2013**
(21) Anmeldenummer: 13001330.3
(22) Anmeldetag: 15.03.2013
(51) Int. Cl.: F25B 30/00

(54) **Wärmepumpe mit einem Halter für Drucksensoren**

(30) Priorität: 22.03.2012 DE 202012002894 U
(71) Anmelder: Stiebel Eltron GmbH & Co. KG, 37603 Holzminden (DE)
(72) Erfinder: Smollich, Steffen, 37603 Holzminden (DE); Dreyer, Jens, 37632 Holzen (DE)

(57) **Zusammenfassung**

Die Erfindung betrifft eine Wärmepumpe mit einem Kältemittelkreislauf (100), der einen Verdichter, einen ersten Wärmeaustauscher, einen zweiten Wärmeaustauscher, ein Drosselorgan, eine Heißgasleitung, eine Saugleitung und wenigstens einen an den Kältemittelkreislauf (100) angeschlossenen ersten Drucksensor (111) aufweist, wobei der erste Drucksensor (111) mit einem Halter (200) am Kältemittelkreislauf (100) befestigt ist.

## Beschreibung

Die Erfindung betrifft eine Wärmepumpe mit einem Kältemittelkreislauf, der einen Verdichter, einen ersten Wärmeaustauscher, einen zweiten Wärmeaustauscher, ein Drosselorgan, eine Heißgasleitung, eine Saugleitung und wenigstens einen über ein erstes Druckröhrchen an den Kältemittelkreislauf angeschlossenen ersten Drucksensor aufweist.

Die Bereitstellung der Heizwärme bei Wärmepumpen erfolgt durch die Kondensation von Kältemittel unter hohem Druck und damit bei hoher Temperatur, während die Wärme an ein Wärmeträgermedium, beispielsweise Heizungswasser, abgeben wird. Das verflüssigte Kältemittel wird anschließend in einem Drosselorgan, z. B. einem Expanionsventil, entspannt und verdampft daraufhin unter Aufnahme von Umgebungswärme im Verdampfer der Wärmepumpe. Der Kältemüteldampf wird vom Verdichter der Wärmepumpe komprimiert, so dass er anschließend wieder im Kondensator der Wärmepumpe verflüssigt werden kann.

Eine Luft/Wasser-Wärmepumpe für eine Außenaufstellung gemäß EP 2 354 709 A2 weist einen Kältemittelkreislauf mit einem von Außenluft durchströmbaren Verdampfer auf. Mit einem von einem Lüfterkanal zumindest teilweise umgebenen Lüfter wird Außenluft gefördert. Zwischen dem Verdampfer und dem Lüfterkanal ist eine Luftführung vorgesehen, die von der Kontur des Verdampfers in die Form des Lüfterkanals übergeht, so dass eine weitgehend geschlossene Luftführung vom Verdampfer zum Lüfter gebildet ist. Eine Saugleitung eines Kältemittelkreislaufs weist einen Kältemittelsammler, einen Entlüfter, einen Drucksensor, einen Hochdruckwächter und ein Temperaturfühlerrohr auf.

Ein Wassererhitzer mit einer Wärmepumpe ist aus DE 60 102 418 T2 bekannt. Mehrere Sensoren, wie beispielsweise ein Wassertemperatursensor zum Erfassen der Temperatur eines in einen Wasserwärmetauscher einströmenden Wassers, ein erster Kältemitteltemperatursensor zum Erfassen der Temperatur des aus dem Wasserwärmetauscher ausgegebenen Kältemittels, ein zweiter Kältemitteltemperatursensor zum Erfassen der Temperatur des in den Luftwärmetauscher einströmenden Kältemittels, ein dritter Kältemitteltemperatursensor zum Erfassen der Temperatur des aus dem Luftwärmetauscher ausströmenden Kältemittels und ein Drucksensor zum Erfassen eines Kältemitteldrucks auf der Hochdruckseite in einem Wärmepumpenkreis. Weiterhin ist ein Außenlufttemperatursensor zum Erfassen der Temperatur der Außenluft vorgesehen. Messsignale von den Sensoren werden in eine Steuereinheit eingegeben, und die Steuereinheit steuert den Betrieb der Vorrichtungen des Wärmepumpenkreises wie beispielsweise eines Expansionsventils und eines Umleitungsventils.

Bei Wärmepumpen werden somit Sensoren zum Erfassen von Druck. Temperatur, Druckdifferenz, Wasservolumenstrom u.a. eingesetzt. Drucksensoren sind dabei meist über ein dünnes Rohr mit dem Kältekreis verbunden.

Aufgabe der Erfindung ist es, wenigstens einen Drucksensor kostengünstig und montagefreundlich in einem Wärmepumpenkreis anzuordnen.

Gelöst ist die Aufgabe durch die Merkmale des Anspruchs 1.

Eine Wärmepumpe weist einen Kältemittelkreislauf mit einem Verdichter, einem ersten Wärmeaustauscher, einem zweiten Wärmeaustauscher, einem Drosselorgan, einer Heißgasleitung und einer Saugleitung auf. Ein erster Drucksensor ist an den Kältemittelkreislauf angeschlossen, wobei der erste Drucksensor mit einem Halter am Kältemittelkreislauf befestigt ist. Vorzugsweise ist der erste Drucksensor über ein erstes Druckröhrchen an den Kältemittelkreislauf angeschlossen.

Der Halter weist vorteilhaft eine erste Durchführung für den wenigstens ersten Drucksensor sowie eine erste Aufnahme für wenigstens eine erste Kältemittelleitung des Kältemittelkreislaufs auf. Der erste Drucksensor ist an der ersten Durchführung fixiert, und der Halter ist mit der ersten Aufnahme an wenigstens einer ersten Kältemittelleitung gehalten.

Gemäß einem weiteren vorteilhaften Gedanken der Erfindung weist der Halter eine erste Durchführung für den ersten Drucksensor und wenigstens eine zweite Durchführung für einen zweiten Drucksensor auf. Damit sind wenigstens der erste und der zweite Drucksensor an wenigstens einer ersten Kältemittelleitung gehalten.

Vorteilhaft nimmt der Halter wenigstens in einer weiteren zweiten Aufnahme eine zweite Kältemittelleitung auf.

Gemäß einem vorteilhaften Gedanken ist die erste Kältemittelleitung der Wärmepumpe eine Heißgasleitung, die im Betrieb der Wärmepumpe Kältemittel bei einer Temperatur von zeitweise vorzugsweise über 80 °C, insbesondere über 100 °C führen kann. Der Halter besteht insbesondere aus einem EPP-, EPS- oder PE- Schaum, Kunststoff- oder Gummimaterial mit einer Temperaturbeständigkeit von wenigstens 80°C, insbesondere wenigstens 100 °C oder 130 °C.

Vorteilhaft ist der erste Drucksensor über ein erstes Druckröhrchen mit der ersten Kältemittelleitung insbesondere ortsnah verbunden. Der Druck eines in der Kältemittelleitung befindlichen Kältemittels ist durch das erste Druckröhrchen zum ersten Drucksensor führbar. Weiterhin vorteilhaft ist der erste Drucksensor mit dem Halter an der gleichen ersten Kältemittelleitung gehalten, so wie das erste Druckröhrchen mit der ersten Kältemittelleitung verbunden ist.

Ein vorteilhafter Halter hält an einem Kältemitteikreislauf wenigstens den ersten Drucksensor, den zweiten Drucksensor oder insbesondere drei oder mehrere Drucksensoren. An einer ersten Kältemittelleitung sind zwei oder mehrere Kältemittelleitungen, insbesondere drei Kältemittelleitungen angebracht.

Gemäß einem vorteilhaften Gedanken der Erfindung weist der Halter eine erste Durchführung und eine erste Aufnahme auf.

Bei einem vorteilhaften Halter ist die wenigstens erste Durchführung oder die wenigstens erste Aufnahme als Bohrung oder Freischnitt, insbesondere mit einem Hinterschnitt ausgeführt. Die erste Kältemittelleitung oder ein erster Drucksensor können in der Bohrung und/oder in der Aufnahme gehalten werden. Der Halter ist vorteilhaft einteilig, zweiteilig oder mehrteilig ausgeführt.

Durch eine Fixierung des wenigstens ersten Drucksensors mit dem Halter ist insbesondere bei Wärmepumpen mit einem drehzahlvariablen Verdichter erreicht, dass der erste Drucksensor montagefreundlich und kostengünstig befestigt ist. Es ist darüber hinaus erreicht, dass der erste Drucksensor und gegebenenfalls weitere Drucksensoren nicht in Resonanz geraten und nicht schwingen. Vorteilhaft ist dies auch bei mehreren Drucksensoren erreicht, die mit dem Halter am Kältemittelkreislauf verbunden sind.

In der Zeichnung zeigen:
- Figur 1: einen Teil eines Käitemittelkreislaufs mit Drucksensoren,
- Figur 2a - 2b: einen Halter für einen Drucksensor,
- Figur 3a - 3c: einen Halter für drei Drucksensoren.

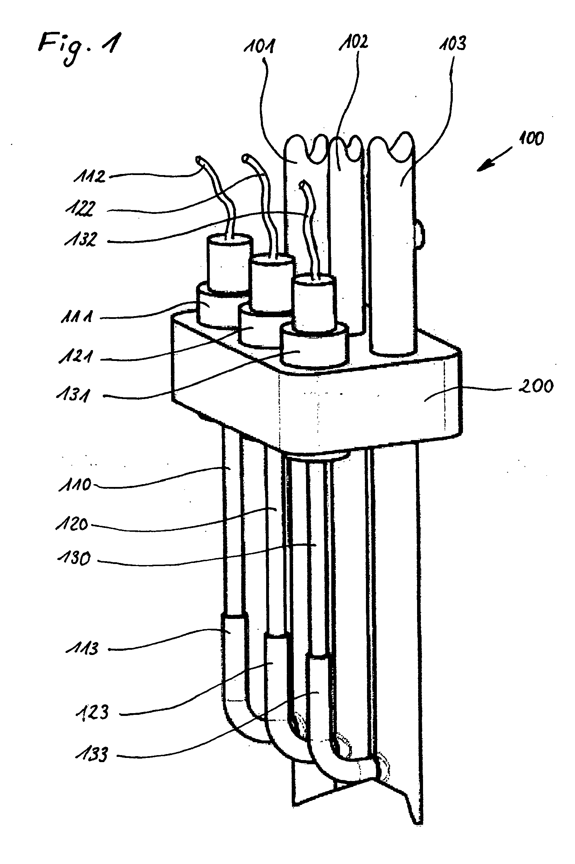

Gemäß Fig. 1 ist ein Teil eines Kältemittelkreislaufs 100 gezeigt, bei dem eine erste Kältemittelleitung 101, eine zweite Kältemittelleitung 102 sowie eine dritte Kältemittelleitung 103 vorzugsweise parallel verlegt sind. An der ersten Kältemittelleitung 101 ist ein erster Rohrbogen 113 angebracht, vorzugsweise angelötet, so dass ein Druck des in der ersten Kältemittelleitung 101 befindlichen Kältemittels auf das Innere des Rohrbogens 113 und auf das an den Rohrbogen 113 angeschlossene Druckröhrchen 110 übertragen wird. Das Druckröhrchen 110 ist an den Rohrbogen 113 angelötet, und am Druckröhrchen 110 wiederum der Drucksensor 111. Ebenso ist ein zweiter Rohrbogen 123 an der zweiten Kältemittelleitung 102 angebracht, und ein dritter Rohrbogen 133 an die dritte Kältemittelleitung 103, so dass der in den Kältemittelleitungen 101, 102 und 103 jeweils herrschende Druck durch die Druckröhrchen 110, 120 und 130 an die jeweiligen Drucksensoren 111, 121 und 131 übertragen werden. Die Drucksensoren 111, 121 und 131 weisen jeweils einen elektrischen Anschluss 112, 122 und 132 auf. Für den ersten Drucksensor 111 ist dies der erste elektrische Anschluss 112, für den Drucksensor 121 der zweite elektrische Anschluss 122 und für den dritten Drucksensor 131 der dritte elektrische Anschluss 132. Die Druckröhrchen 110, 120, 130 sind vorteilhaft nach oben ausgerichtet, so dass sich insbesondere kein flüssiges Kältemittel sammeln kann.

Im Ausführungsbeispiel ist der Halter 200 mit einer ersten Durchführung 210, einer zweiten Durchführung 211 und einer dritten Durchführung 212 für jeweils einen Drucksensor ausgestattet. Auch die Kältemittelleitungen 101, 102 und 103 sind mit einer nicht offenen Durchführung - hier als Bohrung im Halter 200 - gehalten. Der Halter 200 ist vorteilhaft zunächst auf die Kältemittelleitung 101, 102, 103 geschoben, dann ist der Kältemittelkreislauf zusammengelötet oder verbunden. Vorzugsweise nach dem Aufsetzen auf die erste, zweite und dritte Kältemittelleitung 101, 102, 103 wird der Halter 200 auf die Drucksensoren 111, 121 und 131 so aufgeschoben, dass diese vorzugsweise am Halter 200 einrasten. Die Einrastung erfolgt entweder dadurch, dass im Halter 200 eine Nut vorgesehen ist, in die ein Vorsprung oder eine erste Fase des Drucksensors insbesondere flexibel einrastet und in die Nut des Halters 200 hineinspringt, wenn der Drucksensor in den Halter 200 eingeschoben wird. Dies betrifft vorzugsweise alle Drucksensoren 111, 121 und 131. Andererseits kann auch am Halter 200 innen an den jeweiligen Durchführungen 210, 211, 212 eine Erhebung vorgesehen sein, die in eine Vertiefung des Drucksensors einrastet, so dass der Drucksensor bzw. die Drucksensoren an 111, 121 und 131 im Halter 200 formschlüssig fixiert sind. Auch eine reibschlüssige Verbindung ist vorteilhaft durch eine Übergangspassung zwischen dem jeweiligen Drucksensor und den Durchführungen vorstellbar.

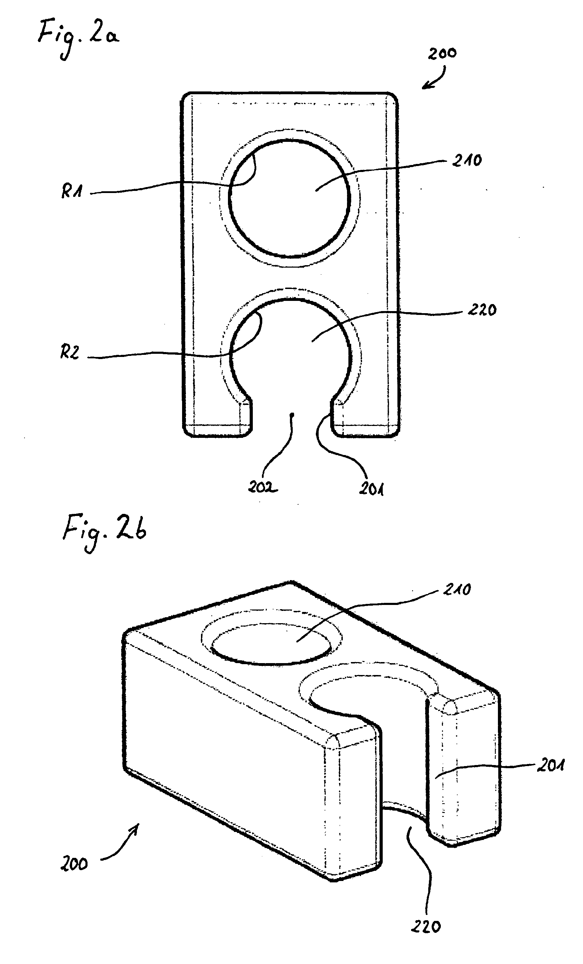

Gemäß Fig. 2a ist ein Halter 200 mit einer ersten Durchführung 210 gezeigt, die einen Radius R1 aufweist. Die erste Durchführung 110 ist als Bohrung ausgeführt. Der Halter 200 weist weiterhin eine erste Aufnahme 220 auf, die eine Öffnung 202 mit einem Hinterschnitt 201 aufweist. Die erste Aufnahme 220 weist einen Radius R2 auf.

Gemäß Fig. 2a sind die Radien R1 und R2 in etwa gleich. Je nachdem, welche Formen die Drucksensoren sowie zumindest die erste Kältemittelleitung aufweisen, sind die Radien R1 und R2 unterschiedlich und an die jeweiligen Durchmesser eines ersten Drucksensors 111 und einer ersten Kältemittelleitung 101 angepasst. Vorteilhaft ist bei dem Halter 200 gemäß Fig. 2a die Öffnung 202 mit einem Hinterschnitt ausgebildet, so dass der Halter auch nach einem fertig verlöteten Kältemittelkreislauf auf eine erste Kältemittelleitung aufgesteckt werden kann. Dabei weitet sich die Öffnung 202 vorteilhafterweise auseinander, und der Halter 200 schnappt auf die erste Kältemittelleitung 101 auf. Zangenartig hält sich der Halter 200 dann an der ersten Kältemittelleitung fest. Anstelle von Bohrungen können auch eckige oder beliebig geformte, z.B. ovale oder ungleichmäßige Durchführungen bzw. Aufnahmen 210, 211, 212 vorgesehen sein.

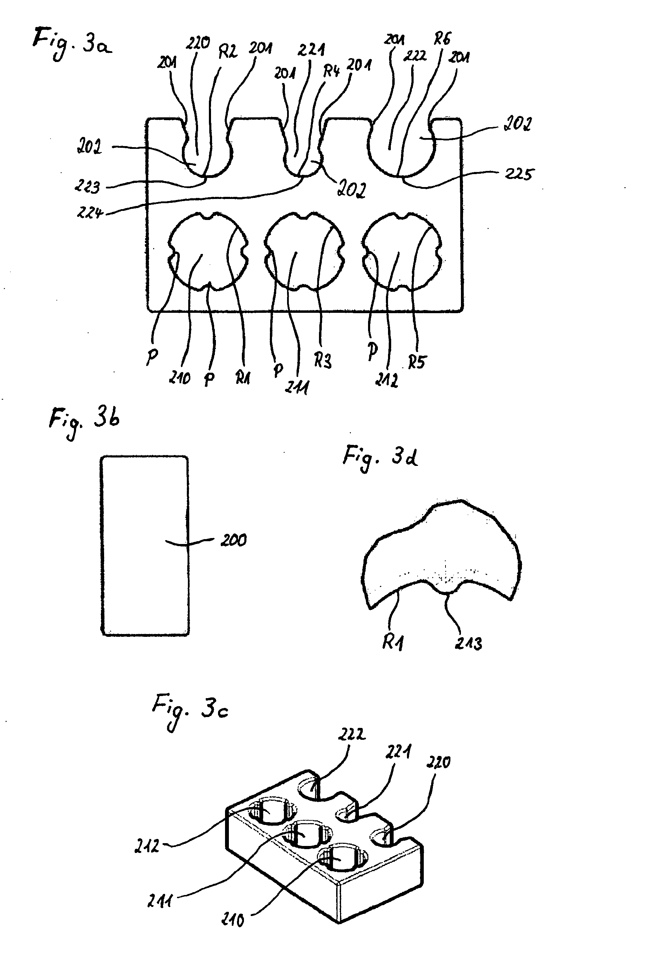

Gemäß Fig. 3 ist ein Halter 200 gezeigt, der für den ersten Drucksensor 111, den zweiten Drucksensor 121 und den dritten Drucksensor 131 vorgesehen ist. Die Drucksensoren sind jeweils in der ersten Durchführung 210, der zweiten Durchführung 211 und der dritten Durchführung 212 aufgenommen, bzw. der Halter 200 ist dafür ausgestattet, Drucksensoren in der ersten Durchführung 210, der zweiten Durchführung 211 und der dritten Durchführung 212 aufzunehmen. Vorteilhaft weisen die Durchführungen 210, 211, 212 nach innen gerichtete Erhebungen P auf. Die Erhebungen P sind jedenfalls ausgehend vom Radius R1 der ersten Durchführung, dem Radius R3 der zweiten Durchführung und dem Radius R5 der dritten Durchführung nach innen gerichtet. Bei einer Ausführung des Drucksensors des Halters 200 aus Kunststoff oder Gummi werden die Erhebungen P in vorteilhafter Weise verformt, so dass ein leichter Druck zumindest auf den ersten Drucksensor 110 ausgeübt wird und der Drucksensor 110 in der ersten Durchführung 210 gehalten ist. Des weiteren ist durch die Erhebungen P eine Schwingungsentkopplung der Drucksensoren von dem Halter 200 bzw. deren mit dem Halter verbundenen ersten Kältemittelleitung 110 erreicht. Eine Fixierung der Drucksensoren 111, 121, 131 mit Kabelbindern, einem Halteblech, einer Verschraubung oder Verklebung ist am Halter vorgesehen.

Die Aufnahmen 220, 221, 222 sind im Ausführungsbeispiel gemäß Fig. 3a weitgehend gleichförmig angeordnet, d.h. hier in einer Reihe, je nachdem wie die Kältemittelleitungen angeordnet sind, können die Aufnahmen 220, 221, 222 auch versetzt oder und gleichförmig sowie mit unterschiedlichen Durchmessern R1. R3 und R5 versehen sein, je nachdem welche Form die Drucksensoren aufweisen.

Fig. 3a weist weiterhin eine erste Aufnahme 220, eine zweite Aufnahme 221 und eine dritte Aufnahme 222 zur Fixierung des Halters 200 an der ersten Kältemittelleitung 101, der zweiten Kältemitteileitung 102 und der dritten Kältemittelleitung 103 auf. In diesem Beispiel sind die Kältemittelleitungen 101, 102, 103 mit unterschiedlichen Radien versehen, so dass der Halter 200 auch bezüglich der ersten Aufnahme 220 unterschiedliche Radien R2, R4 und R6 aufweist. Die Aufnahme 220 weist einen ersten Fußpunkt 223 auf, die zweite Aufnahme 221 einen Fußpunkt 224 und die dritte Aufnahme 222 einen Fußpunkt 225. Die Fußpunkte 223, 224, 225 sind im Ausführungsbeispiel etwa auf einer Linie angeordnet. Des weiteren sind die Mittelpunkte der Aufnahmen 220, 221, 222 jeweils gleichmäßig beabstandet, so dass die erste Kältemittelleitung 101, die zweite Kältemittel 102 und die dritte Kältemittelleitung 103 etwa in gleichem Abstand, insbesondere parallel geführt werden. Es ist vorteilhaft, soweit die Kältemittelleitungen nicht parallel laufen, die Aufnahmen auch nicht parallel ausgerichtet und gleichmäßig zu verteilen. Beispielsweise kann die erste Aufnahme 220 zwischen der ersten Durchführung 210 und der zweiten Durchführung 211 liegen. So kann eine optimale Packungsdichte von Durchführungen und Aufnahmen erreicht werden, insbesondere kann eine flächenzentrierte maximale Packungsdichte erreicht werden, um Material zu sparen. In einem weiteren Ausführungsbeispiel ist der Halter 200 nicht als Block ausgeführt, sondern zwischen den Durchführungen 210, 211, 212 und den Aufnahmen 220, 221, 222 sind lediglich Verbindungsstäbe, Stege oder ähnliche Verbindungen vorgesehen. Hiermit wird eine verbesserte Schwingungsentkopplung insbesondere zwischen den Kältemittelleitungen und den Drucksensoren erreicht. Weiterhin wird Material gespart.

Die Aufnahmen gemäß Fig. 3a weisen jeweils Öffnungen auf, wodurch der Halter 200 auf die Kältemittelleitungen 101, 102, 103 aufgesteckt werden kann. In einem anderen Ausführungsbeispiel, das hier nicht gezeigt ist, weisen auch die Durchführungen 210, 211, 212 zur Halterung der Drucksensoren 111, 121, 131 Öffnungen 102 auf, so dass die Sensoren auf die Halter aufgeschoben oder aufgesteckt werden können. Alle denkbaren Kombinationen von offenen Aufnahmen oder geschlossenen Durchführungen sind umfasst, auch eine Mischung von unterschiedlichen Aufnahmeformen zwischen den Durchführungen 210, 211, 212 und oder zwischen den Aufnahmen 220, 221, 222. Die Radien R2, R4 und R6 der Aufnahmen 210, 211, 212 weisen einen Wert von ca. 2-20 mm auf, insbesondere ca. 3-12 mm. Die Durchführungen 210, 211, 212 weisen insbesondere einen gleichen Radius R1, R3 und R5 auf, soweit die Drucksensoren auch gleiche Radien haben. Vorteilhaft liegen die Radien R1, R3 und R5 für die Drucksensoren ca. zwischen 3 und 20 mm, insbesondere ca. 4 und 15 mm. Die Radien R1, R3 und R5 können aber auch unterschiedlich sein, soweit insbesondere die Drucksensoren unterschiedliche Durchmesser aufweisen. Soweit Drucksensoren mit quadratischer, eckiger oder anders geformter äußerer Geometrie vorliegen, so weisen die Durchführungen vorteilhaft ebenfalls entsprechende Formen auf.

## Patentansprüche

1. Wärmepumpe mit einem Kältemittelkreislauf (100), der einen Verdichter, einen ersten Wärmeaustauscher, einen zweiten Wärmeaustauscher, ein Drosselorgan, eine Heißgasleitung, eine Saugleitung und wenigstens einen an den Kältemittelkreislauf (100) angeschlossenen ersten Drucksensor (111) aufweist,
**dadurch gekennzeichnet,**
**dass** der erste Drucksensor (111) mit einem Halter (200) am Kältemittelkreislauf (100) befestigt ist.

2. Wärmepumpe nach Anspruch 1,
**dadurch gekennzeichnet,**
**dass** der Halter (200) eine erste Durchführung (210) für den wenigstens ersten Drucksensor (111) und eine erste Aufnahme (220) für wenigstens eine erste Kältemittelleitung (101) des Kältemittelkreislaufs (100) aufweist, der erste Drucksensor (111) an der ersten Durchführung (210) fixiert ist, und der Halter (200) mit der ersten Aufnahme (220) an wenigstens einer ersten Kältemittelleitung (101) gehalten ist.

3. Wärmepumpe nach einem der vorhergehenden Ansprüche,
**dadurch gekennzeichnet,**
**dass** der Halter (200) die erste Durchführung (210) für den ersten Drucksensor (111) und wenigstens eine zweite Durchführung (211) für einen zweiten Drucksensor (121) aufweist, womit wenigstens der erste und der zweite Drucksensor (111, 121) an wenigstens einer ersten Kältemittelleitung (101) gehalten sind.

4. Wärmepumpe nach einem der vorhergehenden Ansprüche,
**dadurch gekennzeichnet,**
**dass** der Halter (200) wenigstens eine zweite Aufnahme (221) aufweist, um eine zweite Kältemittelleitung (102) aufzunehmen.

5. Wärmepumpe nach einem der vorhergehenden Ansprüche,
**dadurch gekennzeichnet,**
**dass** die erste Kältemittelleitung (101) im Betrieb der Wärmepumpe Kältemittel bei einer Temperatur von zumindest zeitweise vorzugsweise über 80 °C, insbesondere über 100 °C führen kann, und der Halter (200) insbesondere aus einem EPP-, EPS-, PE-Schaum, Kunststoff- oder Gummimaterial vorzugsweise mit einer Temperaturbeständigkeit von wenigstens 80 °C, insbesondere wenigstens 100 °C oder 130 °C besteht.

6. Wärmepumpe nach einem der vorhergehenden Ansprüche,
**dadurch gekennzeichnet,**
**dass** der erste Drucksensor (111) über ein erstes Druckröhrchen (110) mit der ersten Kältemittelleitung (101) insbesondere ortsnah verbunden ist, der Druck eines in der Kältemittelleitung befindlichen Kältemittels durch das erste Druckröhrchen (110) zum ersten Drucksensor (111) führbar ist, und der erste Drucksensor (111) mit dem Halter (200) an der gleichen ersten Kältemittelleitung (101) gehalten ist.

7. Wärmepumpe nach einem der vorhergehenden Ansprüche,
**dadurch gekennzeichnet,**
**dass** der Halter (200) wenigstens den ersten Drucksensor (111), den zweiten Drucksensor (121) oder insbesondere drei oder mehr Drucksensoren hält und an einer ersten Kältemittelleitung (101) zwei oder mehr Kältemittelleitungen (102, 103). insbesondere drei Kältemittelleitungen angebracht sind.

8. Halter für einen Kältemittelkreislauf (100) zur Fixierung wenigstens eines ersten Drucksensors (111) an einer ersten Kältemittelleitung (101),
**dadurch gekennzeichnet,**
**dass** der Halter (200) eine erste Durchführung (210) und eine erste Aufnahme (220) aufweist.

9. Halter nach Anspruch 8,
**dadurch gekennzeichnet,**
**dass** die wenigstens erste Durchführung (210) oder die wenigstens erste Aufnahme (220) als Bohrung oder Freischnitt mit einem Hinterschnitt (201) ausgeführt ist, so dass eine erste Kältemittelleitung (101) und/oder ein erster Drucksensor (111) in der Bohrung oder in der Aufnahme gehalten werden kann.

10. Halter nach einem der Ansprüche 8 oder 9,
dadurch gekennzeichriet,
dass der Halter (200) einteilig, zweiteilig oder mehrteilig ausgeführt ist.
